(19) Europäisches Patentamt
European Patent Office
Office européen des brevets

(11) **EP 4 195 802 A1**

(12) **EUROPEAN PATENT APPLICATION**

(43) Date of publication:
**14.06.2023 Bulletin 2023/24**

(21) Application number: **21213267.4**

(22) Date of filing: **08.12.2021**

(51) International Patent Classification (IPC):
**H04W 64/00** (2009.01)   **G01S 5/02** (2010.01)
**G01S 13/76** (2006.01)   **H04W 84/12** (2009.01)

(52) Cooperative Patent Classification (CPC):
**H04W 64/00; G01S 5/015; G01S 13/765;**
**H04W 84/12**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **BARBU, Oana-Elena**
  **02610 Espoo (FI)**
• **KIILERICH PRATAS, Nuno Manuel**
  **02610 Espoo (FI)**
• **VEJLGAARD, Benny**
  **02610 Espoo (FI)**

(74) Representative: **Sayer, Robert David**
**Venner Shipley LLP**
**200 Aldersgate**
**London EC1A 4HD (GB)**

(54) **POSITIONING**

(57) Example embodiments may relate to systems, methods and/or computer programs relating to positioning, for example for terminating or adapting an established positioning session under certain conditions. For example, the method may involve monitoring, for a plurality of time instances during transmission over a wireless channel of a positioning signal from a first terminal to a second terminal as part of a positioning session, one or more features of the wireless channel. The method may also involve identifying based on a value of one, or a combination, of the monitored one or more features between a first time instance and a second time instance, a change indicative of transition of at least one of the first and second terminals from a first environment to a second environment. The method may also involve causing termination or adaptation of the active positioning session responsive to the identification.

200

202

MONITORING, FOR A PLURALITY OF TIME INSTANCES DURING TRANSMISSION OVER A WIRELESS CHANNEL OF A POSITIONING SIGNAL FROM A FIRST TERMINAL TO A SECOND APPARATUS AS PART OF A POSITIONING SESSION, ONE OR MORE FEATURES OF THE WIRELESS CHANNEL

204

IDENTIFYING, BASED ON A VALUE OF ONE, OR A COMBINATION, OF THE MONITORED ONE OR MORE FEATURES BETWEEN A FIRST TIME INSTANCE AND A SECOND TIME INSTANCE, A CHANGE INDICATIVE OF TRANSITION OF AT LEAST ONE OF THE FIRST TERMINAL AND THE SECOND TERMINAL FROM A FIRST ENVIRONMENT TO A SECOND ENVIRONMENT

206

CAUSING TERMINATION OR ADAPATION OF THE POSITIONING SESSION RESPONSIVE TO THE IDENTIFICATION

*FIG. 2*

EP 4 195 802 A1

**Description**

**Field**

Example embodiments may relate to systems, methods and/or computer programs relating to positioning, for example for terminating an established positioning session under certain conditions.

**Background**

Determining the position of a terminal such as a mobile handset or computer in a real-world space is important for many use cases, for example for location-based services. Indoor positioning, which can be based on received signals from indoor access points, can be challenging for various reasons, not least because of fluctuations in signal readings due to walls, furniture and people in vicinity of the "target" terminal to be positioned. So-called Fine Timing Measurement (FTM) is an addition to the IEEE 802.11 WLAN standard which uses time of flight information instead of received signal strength to measure range from an initiating station (ISTA), e.g. the target terminal, to a responding station (RSTA), e.g. the access point. More recently, the IEEE 802.11az standard introduces some enhancements on top of FTM.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising: means for monitoring, for a plurality of time instances during transmission over a wireless channel of a positioning signal from a first terminal to the apparatus as part of a positioning session, one or more features of the wireless channel; means for identifying based on a value of one, or a combination, of the monitored one or more features between a first time instance and a second time instance, a change indicative of transition of at least one of the first terminal and the apparatus from a first environment to a second environment; and means for causing termination or adaptation of the positioning session responsive to the identification.

The identifying means may be configured to identify the change based on knowledge of an expected change in one, or in a combination, of the one or more features due to transition of the at least one of the first terminal and the apparatus from the first environment to the second environment. The first environment may be an indoor environment and the second environment may be an outdoor environment.

The apparatus may further comprise: means for computing a channel response for the wireless channel at the plurality of time instances; and means for determining the one or more features of the wireless channel based on components of the channel response.

The means for determining the one or more features may be configured to: identify from the channel response a first cluster of components as distinct from a second cluster of components in the time domain; and determine a first set of features based on components of the first cluster and a second set of features based on components of the second cluster.

The first cluster and the second cluster may be identified based on respective energy levels of the components of the channel response.

The first cluster of components may comprise at least one of: components having a respective power within a predetermined range of a maximum power level of the components in the channel response; and components which collectively sum, when taken in time-domain order, a predetermined percentage, less than 100%, of the total channel power, and wherein the second cluster of components may comprise the remaining components.

The one or more features of the wireless channel may comprise one, or a combination of: maximum cluster power $P_n^A$ as the sum of powers for components of the first cluster; maximum cluster power $P_n^B$ as the sum of powers for components of the second cluster; cluster sparsity $S_n^A$ indicative of the number of components in the first cluster; cluster sparsity $S_n^B$ indicative of the number of components in the second cluster; mean delay $m_n^A$ of components of the first cluster; mean delay $m_n^B$ of components of the second cluster; RMS delay spread $d_n^A$ of components of the first cluster; and RMS delay spread $d_n^B$ of components of the second cluster.

The identifying means may be configured to identify a transition to the second environment in response to a computed change in value for a combination of the features meeting respective thresholds. The respective thresholds for the combination of the features may be determined by use of at least one of: a channel emulation tool, a simulator, and collected measurements appropriate to the wireless channel.

The identifying means may comprise a trained classifier configured to take as input a set of test data based on a combination of the features and to provide an output identifying a transition to the second environment based on trained parameters of the classifier.

The identifying means may be configured to output a binary result identifying a transition or no transition and usable by the termination or adaptation means.

The apparatus may further comprise: means for evaluating a quality metric, at least indicative of the signal to noise ratio, SNR, for the wireless channel at or around the first time instance; and means for dynamically selecting one or a plurality of the channel features for the identifying means based on the evaluated quality metric.

The means for dynamically selecting the one or the plurality of the channel features may be configured, responsive to the evaluated quality metric being indicative of a decreasing SNR, to select an increasing number of features from the second set of features based on components of the second cluster. In response to the evaluated quality metric being below a threshold, the selected features may be selected from the second set of features based on components of the second cluster.

The apparatus may further comprise means for causing the apparatus to initiate a new positioning session with a different terminal, subsequent to the positioning session being terminated.

The apparatus may further comprise means, responsive to the identification, for causing the apparatus to adapt the positioning session to use a different positioning technology.

The apparatus may be a mobile user terminal.

The positioning session may be in accordance with the 802.11 az standard.

According to a second aspect, there is described a method comprising: monitoring, for a plurality of time instances during transmission over a wireless channel of a positioning signal from a first terminal to a second terminal as part of a positioning session, one or more features of the wireless channel; identifying based on a value of one, or a combination, of the monitored one or more features between a first time instance and a second time instance, a change indicative of transition of at least one of the first and second terminals from a first environment to a second environment; and causing termination or adaptation of the active positioning session responsive to the identification.

The identifying step may comprise identifying the change based on knowledge of an expected change in one, or in a combination, of the one or more features due to transition of the at least one of the first terminal and the apparatus from the first environment to the second environment. The first environment may be an indoor environment and the second environment may be an outdoor environment.

The method may further comprise: computing a channel response for the wireless channel at the plurality of time instances; and determining the one or more features of the wireless channel based on components of the channel response.

The determining step may comprise: identifying from the channel response a first cluster of components as distinct from a second cluster of components in the time domain; and determining a first set of features based on components of the first cluster and a second set of features based on components of the second cluster.

The first cluster and the second cluster may be identified based on respective energy levels of the components of the channel response.

The first cluster of components may comprise at least one of: components having a respective power within a predetermined range of a maximum power level of the components in the channel response; and components which collectively sum, when taken in time-domain order, a predetermined percentage, less than 100%, of the total channel power, and wherein the second cluster of components may comprise the remaining components.

The one or more features of the wireless channel may comprise one, or a combination of: maximum cluster power $P_n^A$ as the sum of powers for components of the first cluster; maximum cluster power $P_n^B$ as the sum of powers for components of the second cluster; cluster sparsity $S_n^A$ indicative of the number of components in the first cluster; cluster sparsity $S_n^B$ indicative of the number of components in the second cluster; mean delay $m_n^A$ of components of the first cluster; mean delay $m_n^B$ of components of the second cluster; RMS delay spread $d_n^A$ of components of the first cluster; and RMS delay spread $d_n^B$ of components of the second cluster.

The identifying step may identify a transition to the second environment in response to a computed change in value for a combination of the features meeting respective thresholds. The respective thresholds for the combination of the features may be determined by use of at least one of: a channel emulation tool, a simulator, and collected measurements appropriate to the wireless channel.

The identifying step may involve use of a trained classifier for taking as input a set of test data based on a combination of the features and to provide an output identifying a transition to the second environment based on trained parameters of the classifier.

The identifying step may output a binary result identifying a transition or no transition and usable by the termination or adaptation means.

The method may further comprise: evaluating a quality metric, at least indicative of the signal to noise ratio, SNR, for the wireless channel at or around the first time instance; and dynamically selecting one or a plurality of the channel features for the identifying step based on the evaluated quality metric.

The step of dynamically selecting the one or the plurality of the channel features may, responsive to the evaluated quality metric being indicative of a decreasing SNR, comprise selecting an increasing number of features from the second set of features based on components of the second cluster. In response to the evaluated quality metric being below a threshold, the selected features may be selected from the second set of features based on components of the second cluster.

The method may further comprise causing the apparatus to initiate a new positioning session with a different terminal, subsequent to the positioning session being terminated.

The method may further comprise, responsive to the identification, causing the apparatus to adapt the positioning session to use a different positioning technology.

The method may be performed by a mobile user terminal.

The positioning session may be in accordance with the 802.11 az standard.

According to a third aspect, there is provided a computer program product comprising a set of instructions which, when executed on an apparatus, is configured to cause the apparatus to carry out the method of any preceding method definition.

According to a fourth aspect, there is provided a non-transitory computer readable medium comprising program instructions stored thereon for performing a method, comprising: monitoring, for a plurality of time instances during transmission over a wireless channel of a positioning signal from a first terminal to a second terminal as part of a positioning session, one or more features of the wireless channel; identifying based on a value of one, or a combination, of the monitored one or more features between a first time instance and a second time instance, a change indicative of transition of at least one of the first and second terminals from a first environment to a second environment; and causing termination or adaptation of the active positioning session responsive to the identification.

The program instructions of the fourth aspect may also perform operations according to any preceding method definition of the second aspect.

According to a fifth aspect, there is provided an apparatus comprising: at least one processor; and at least one memory including computer program code which, when executed by the at least one processor, causes the apparatus to: monitor, for a plurality of time instances during transmission over a wireless channel of a positioning signal from a first terminal to a second terminal as part of a positioning session, one or more features of the wireless channel; identify based on a value of one, or a combination, of the monitored one or more features between a first time instance and a second time instance, a change indicative of transition of at least one of the first and second terminals from a first environment to a second environment; and cause termination or adaptation of the active positioning session responsive to the identification.

The computer program code of the fifth aspect may also perform operations according to any preceding method definition of the second aspect.

## Brief Description of the Drawings

Example embodiments will now be described by way of non-limiting example, with reference to the accompanying drawings, in which:

FIGs. 1A and 1B are block diagrams of a positioning scenario which may be useful for understanding example embodiments;

FIG. 2 is a flow diagram showing operations that may be performed according to example embodiments;

FIG. 3 is a graphical view of an impulse response for an example indoor channel which may be useful for understanding example embodiments;

FIG. 4 is a block diagram of a system according to example embodiments;

FIG. 5 is a flow diagram showing operations that may be performed according to example embodiments as part of the FIG. 2 method;

FIG. 6 is a block diagram of an apparatus that may provide part of the FIG. 4 system;

FIG. 7 is a block diagram of another apparatus that may provide part of the FIG. 4 system;

FIG. 8 is a block diagram of another apparatus that may provide part of the FIG. 4 system;

FIG. 9 is a schematic view of an apparatus in which example embodiments may be embodied; and

FIG. 10 is a plan view of a non-transitory medium which may store computer-readable code for causing an apparatus, such as the FIG. 9 apparatus, to perform operations according to example embodiments.

**Detailed Description**

Example embodiments may relate to systems, methods and/or computer programs relating to positioning.

Determining a position of a terminal, such as a mobile handset or computer, in a real-world space is important for many use cases, for example for location-based services. The Global Navigation Satellite System (GNSS) and related technologies are useful for outdoor positioning. For indoor positioning, however, GNSS is not usually suitable due to the "target" terminal not having line-of-sight visibility to a required number of satellites. Rather, indoor positioning may make use of received signals from, for example, indoor access points (APs) but even this can be challenging for various reasons, not least because of fluctuations in signal readings due to walls, furniture and people in vicinity of the "target" terminal.

As mentioned above, so-called Fine Timing Measurement (FTM) is an addition to the IEEE 802.11 WLAN standard which uses time of flight information instead of received signal strength to measure range from an initiating station (ISTA), e.g. the target terminal, to a responding station (RSTA), e.g. another terminal such as an AP. More recently, the IEEE 802.11az standard introduces some enhancements on top of FTM. For example, the IEEE 802.11az standard specifies that accurate positioning is mandatory for the ISTA. These enhancements may be based on high efficiency Neighbor Discovery Protocol (NDP) and multi-user physical protocol data unit (MU PPDU) frames which use the same headers, modulation, symbol length to allow for adaptation. These frames may then be used via physical layer (PHY) processing to collect time and/or angle measurements such as time of arrival (ToA), angle of arrival (AoA), reference signal received power (RSRP) and/or angle of departure (AoD). Their respective accuracies and the reporting of the measurements may be performed via well-defined higher layer messages.

In such indoor positioning techniques, the ISTA may initiate a positioning session (PS) with the RSTA. The session may be periodic one in the sense that the ISTA may require a new position estimate or a new data exchange every $T$ seconds. Either or both of the ISTA and the RSTA may move over time, for example from a first environment where the PS was successfully established to a second environment. For example, the first environment may be an indoor environment and the second environment may be an outdoor environment. The session quality may then degrade relatively quickly due to severe and/or sudden attenuation of signal quality, which may be due to structural features (e.g. thick walls) between the ISTA and RSTA.

The ISTA may attempt to recover the PS by restarting the protocol with the RSTA a number of times, e.g. until a timer expires, so that the ISTA determines that the PS has been compromised such that recovery is no longer feasible. The ISTA may then terminate the PS with the RSTA. However, this may result in signaling overhead and energy consumption as well as degraded positioning accuracy and increased latency.

Example embodiments provide a way of mitigating or avoiding such issues. For example, example embodiments may provide a way for the ISTA to detect when the propagation environment between the ISTA and the RSTA has changed significantly, e.g. when at least one of the ISTA and the RSTA has transitioned from an indoor environment to an outdoor environment. The ISTA may then terminate or adapt the PS.

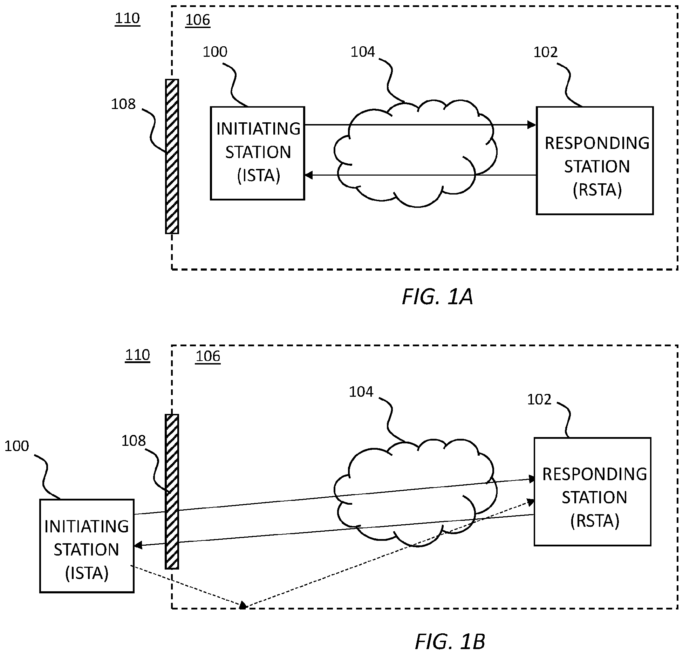

FIG. 1A is a block diagram of a positioning scenario which may be useful for understanding example embodiments. An ISTA 100 is shown in signal communication with an RSTA 102 via a network 104 in an indoor environment 106, as distinct from an adjacent outdoor environment 110. A structural element 108 such as a concrete wall is shown at the boundary of the indoor environment 106 and the outdoor environment 110.

The ISTA 100 may be any form of terminal capable of data communications. For example, the ISTA 100 may be a mobile terminal such as a smartphone, a tablet computer, a laptop computer, a wearable terminal such as a smartwatch, or a terminal such as a personal computer (PC).

The RSTA 102 may also be any form of terminal capable of data communications. In the present case, the RSTA 102 may be a WiFi AP, e.g. an AP configured to communicate using the IEEE 802.11 standard or an enhancement thereof. The network 104 may therefore be considered a WiFi network but it will be appreciated that any form of communications network may be employed.

The ISTA 100 and the RSTA 102 may comprise respective communications functionality, such as modulation and demodulation components and one or more antennae (not shown.)

It will be seen from FIG. 1A that a PS has been established by virtue of the bidirectional signaling between the ISTA 100 and the RSTA 102. The PS may be any form of known PS, such as one using FTM as mentioned above, and therefore a detailed explanation of the establishment process is not given here.

The ISTA 100 may receive positioning signals s(t) from the RSTA 102 as part of the PS and use such positioning signals to compute one or more of ToA, AoA, AoD, RSRP as mentioned above, and thereby compute a current position using known methods which may involve multilateration.

It will be seen from FIG. 1B that movement of the ISTA 100 to the outdoor environment 100 may result at least in significant attenuation and/or reflections due to the presence of at least the structural element 108.

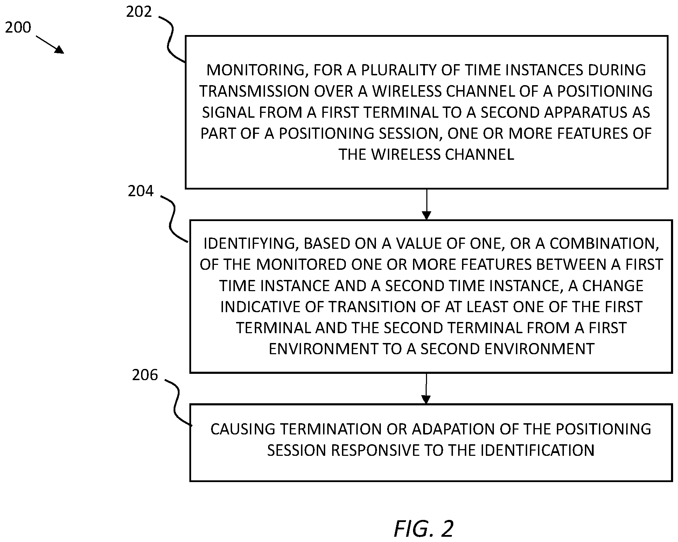

FIG. 2 is a flow diagram showing processing operations, indicated generally by reference numeral 200, according to example embodiments. The processing operations 200 may be performed in hardware, software, firmware, or a combination thereof. For example, the processing operations may be performed by the ISTA 100 shown in FIG. 1A.

A first operation 202 may comprise monitoring, for a plurality of time instances during transmission over a wireless channel of a positioning signal from a first terminal to a second terminal as part of a PS, one or more features of the wireless channel.

A second operation 204 may comprise identifying based on a value of one, or a combination, of the monitored one or more features between a first time instance and a second time instance, a change indicative of transition of at least one of the first terminal and the second terminal from a first environment to a second environment.

A third operation 206 may comprise causing termination or adaptation of the PS responsive to the identification.

In the case that the processing operations are performed by the ISTA 100 shown in FIG. 1A, the second apparatus referred to in the first and second operations 202, 204 may refer to the ISTA. The first apparatus referred to in the first and second operations 202, 204 may refer to the RSTA 102.

The monitoring referred to in the first operation 202 may involve measurement of a value of one, or a combination of the monitored one or more features at the ISTA 100. Alternatively, the value or value(s) may be received from the first apparatus, e.g. the RSTA 102 in FIG. 1A.

Termination of the positioning session may involve ceasing communications related to at least the PS between the ISTA 100 and the RSTA 102.

Adaptation of the positioning session may, for example, involve keeping the PS active but moving or transferring the PS to an alternative standard or protocol, e.g. from WiFi to a mobile radio access network (RAN) standard, e.g. one of the fourth generation (4G) or fifth generation (5G) New Radio (NR) standards.

In this way, it may be determined by monitoring values of one, or a combination of the features, when channel conditions have changed beyond certain predetermined limits indicative of a transition of one or both the ISTA 100 and RSTA 102 from one environment to another. The transition may be from an indoor environment to an outdoor environment.

By terminating or adapting the PS, as in the third operation 203, aforementioned disadvantages may be avoided or at least mitigated.

In the above, each of the first to third operations 202, 204, 206 may be performed by one, or a respective "means", which may comprise hardware, software, firmware or a combination thereof. For example, the hardware, may comprise one or more processors, controllers or a combination thereof.

In example embodiments, the identifying means may be configured to identify the change based on knowledge of an expected change in one, or in a combination, of the one or more features due to transition of the at least one of the ISTA 100 and the RSTA 102 from the first environment to the second environment.

In example embodiments, the first operation 202 may involve monitoring the channel response of the wireless channel using active signals of the PS.

For example, other operations may comprise computing a channel response for the wireless channel at the plurality of time instances and determining the one or more features of the wireless channel based on components of the channel response. The channel response may be indicative of, but is not limited to, a channel impulse response for the wireless channel at the plurality of time instances. The components may comprise time-domain components.

For example, assume the RSTA 102 shown in FIG. 1A transmits known positioning signals $s(t)$ to the ISTA 100. The ISTA 100 may compute one or more of ToA, AoA, AoD, RSRP using a sampled received signal $r(kT)$ where $T$ is the sampling time of the system and $k$ is an integer such that $k = \{1, 2, ..., N\}$. The received signal $r(t)$ may be considered a noisy convolution between s(t) and a current, e.g. indoor channel. An impulse response is represented in equation (1) below which may be described as a train of impulses, each characterizing a reflection or the direct path between the ISTA 100 and the RSTA 102.

$$h(t) = \sum_{l=1}^{L} a_l \delta(t - \tau_l) + \sum_{k=1}^{K} b_k \delta(t - \tau_k) \quad (1)$$

where a and b are the complex gains of each tap.

It may be observed in (1) that, for an indoor channel, there are two clusters of one or more components. Therefore, $a_l$ refers to the complex gain of the i-th tap in the first cluster and $b_l$ refers to the complex gain of the i-th tap in the second cluster.

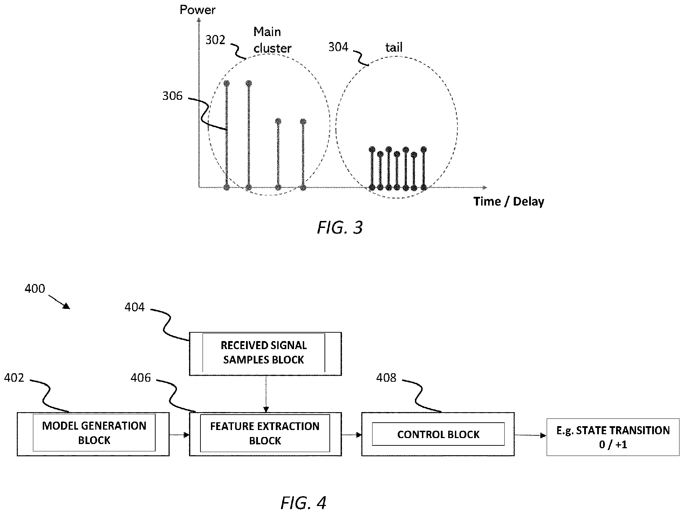

To illustrate, FIG. 3 is a graphical view of an impulse response for an example indoor channel, showing components on a time/delay axis against power, and in which first and second clusters 302, 304 may be observed.

For example, the first cluster 302 may comprise L components which may characterize the strongest L reflections. The first cluster 302 may exhibit specular behaviour in the sense that paths are clearly separated in the time/delay domain and their respective powers are within a certain level (x dB, e.g. x = 3) of the power of the strongest component 306. There may be one or more sub-clusters within the first cluster 302.

For example, the second cluster 304 may comprise K components which may characterize later-arriving reflections. This second cluster 304 may be referred to as the "diffuse channel tail" or simply "tail" of the channel response and may be characterized by closely-spaced taps (e.g. no more than a couple of T nanoseconds away from one another and usually all with relatively low and similar power.)

In practical terms, a model can be provided for the channel response, indicative or representative of the channel impulse response. From this, by analysis of components of the channel response at given time instances, the one or more features may be identified and monitored as will be explained below.

An example modelling process for an indoor channel will first be described.

As mentioned above, the RSTA 102 shown in FIG. 1A may transmit known positioning signals $s(t)$ to the ISTA 100. At the ISTA 100, the received signal $r(t)$ is sampled and a noisy, sampled power delay profile (NSPDP) of the indoor channel may be obtained, for example by retaining the envelope of cross-correlation between the received samples with the known transmit signal s(t).

The j-th sample, $j = 1{:}N,$ of the received signal may be referred to as $p_j = |g(jT)|^2, g(t) = (r * s)(t)$, where:

$$g(jT) = \sum_{l=1}^{L} c(jT - \tau_l)a_l + \sum_{k=1}^{K} c(jT - \tau_k)b_k + w(jT) \quad (2).$$

Here, $w(t) = (\epsilon * s)(t)$, $\epsilon(t)$ may refer to additive white Gaussian noise (AWGN) and $c(t)$ *to* the known autocorrelation *of s(t).*

Depending on the type of sequence within the positioning signals s(t), e.g. Zadoff-Chu codes or Gold codes, autocorrelation exhibits some advantageous properties such as a constant amplitude zero autocorrelation (CAZAC) waveform. This means that $c(t - \tau_l)$ may be non-zero only around the true delays $\tau_l$. An example simplification of this is to assume that, for a fine-enough value of $T$ (e.g. $T = 10$ ns), delays can be approximated as multiples of resolution $T$, i.e. $\tau_l \approx lT$, and that the maximum delay in each cluster is no longer than $L'\,T$, and $K'\,T$ respectively.

Subsequently, the approximated NSPDP can be cast as:

$$g(jT) \approx \sum_{l=1}^{L'} \widehat{a_l}\delta(j - l) + \sum_{k=1}^{K'} \widehat{b_k}\,\delta(k - l), \quad (3)$$

Here, $\widehat{a_l} = c((j - l)T)a_l + \xi_l$ and $\widehat{b_k} = c((j - k)T)b_k + \xi_k$, where $\xi_l$ models an estimation error.

FIG. 4 is a block diagram of an example system 400 according to example embodiments. The example system 400 may be provided by the ISTA 102 described with reference to FIG. 1A.

The system 400 may comprise a model generation block 402, a received signal samples block 404, a feature extraction block 406 and a control block 408.

The control block 408 may be configured to perform at least the operations described with respect to FIG. 2.

The model generation block 402 may be configured to generate the above mentioned model of the channel response, for example an indoor channel response, which is summarised by equation (3) above.

The received signal samples block 404 may be configured to receive the positioning signals from the RSTA 102 and to sample the signals at the predefined sample rate $T$. The sampled positioning signals are provided to the feature extraction block 406.

The feature extraction block 406 may be configured, based on the model of the channel response and the received signal samples from the received signal samples block 404, to determine the one or more features being monitored by the control block 408. In other words, the value of the one or features is determined for monitoring.

The way in which the one or more features are determined will be explained below.

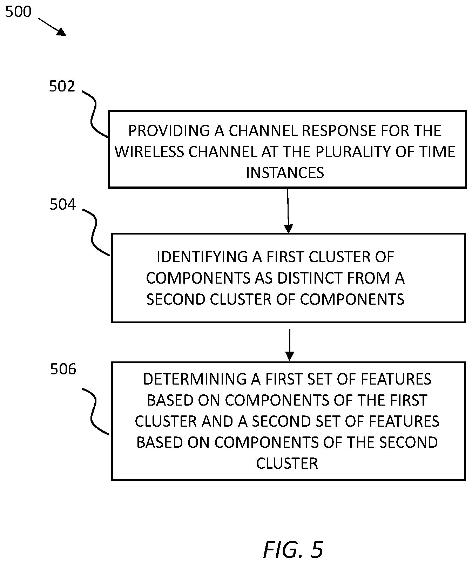

FIG. 5 is a flow diagram showing processing operations, indicated generally by reference numeral 500, according to example embodiments. The processing operations 500 may be performed in hardware, software, firmware, or a combination thereof. For example, the processing operations may be performed by the ISTA 100 shown in FIG. 1A.

A first operation 202 may comprise providing a channel response for the wireless channel at the plurality of time instances.

A second operation 504 may comprise identifying a first cluster of components as distinct from a second cluster of components.

A third operation 506 may comprise determining a first set of features based on components of the first cluster and a second set of features based on components of the second cluster.

In the above, each of the first to third operations 502, 504, 506 may be performed by one, or a respective "means", which may comprise a hardware, software, firmware or a combination thereof. For example, the hardware may comprise one or more processors, controllers or a combination therefore.

The first cluster and the second cluster may be identified based on respective energy levels of the components of the channel response.

In example embodiments, the first cluster of components may be determined as comprising at least one of:

(i) components having a respective power within a predetermined range of a maximum power level of the components in the channel response; and

(ii) components which collectively sum, when taken in time-domain order, a predetermined percentage, less than 100%, of the total channel power.

For example, in the case of (i) above, *L'* may be the index of a particular component $\widehat{a_{L'}}$ where

$$|\widehat{a_{L'}}|^2 \geq \max \frac{\{|\widehat{a_l}|^2\}}{2}.$$

The second cluster of components may comprise the remaining components of the channel response.

In example embodiments, the respective delays and powers of the first and second clusters of components may be stored as distinct sets of component data, e.g.:

$$A = \left\{|\widehat{a_l}|^2, l = 1:L'\right\} \text{ and } \tau^A = \left\{\tau_l, l = 1:L'\right\}$$

$$B = \left\{|\widehat{b_k}|^2, k = 1:K'\right\} \text{ and } \tau^B = \left\{\tau_k, k = 1:K'\right\}.$$

Next, an index n may be used to designate the time instance, which may be a slot, sub frame, symbol number etc., at which values of the above sets of component data *A* and B are computed.

For each time instance n, and using one or more of the above sets of component data, A and B, values for the one or more features may be computed.

In example embodiments, the one or more features of the wireless channel may comprise one, or a combination of:

maximum cluster power $P_n^A$ as the sum of powers for components of the first cluster;

maximum cluster power $P_n^B$ as the sum of powers for components of the second cluster;

cluster sparsity $S_n^A$ indicative of the number of components in the first cluster;

cluster sparsity $S_n^B$ indicative of the number of components in the second cluster;

mean delay $m_n^A$ of components of the first cluster;

mean delay $m_n^B$ of components of the second cluster;

RMS delay spread $d_n^A$ of components of the first cluster; and

RMS delay spread $d_n^B$ of components of the second cluster.

Other features may be used.

The values for the one or more features computed at each time instance n may be stored in order to identify a change at between a first time instance and a second time instance. For example, the values for the one or more features may be buffered in a First In First Out (FIFO) queue with size two, so that two consecutive sets are stored together: a first set of values for time instance n, and another set for time instance *n-1*.

For example, table 1 below indicates an example set of eight features, mentioned above, alongside values for each of the features at n, *n-1* which are indicated by respective feature indices 1 to 8.

Table 1: Feature Collection

| Feature index | Current instance *n* | Previous instance *n-1* |
|---|---|---|
| 1 | $P_n^A$ | $P_{n-1}^A$ |
| 2 | $P_n^B$ | $P_{n-1}^B$ |
| 3 | $S_n^A$ | $S_{n-1}^A$ |
| 4 | $S_n^B$ | $S_{n-1}^B$ |
| 5 | $m_n^A$ | $m_{n-1}^A$ |
| 6 | $m_n^B$ | $m_{n-1}^B$ |
| 7 | $d_n^A$ | $d_{n-1}^A$ |
| 8 | $d_n^B$ | $d_{n-1}^B$ |

The values for the features, or the difference between values for the current time instance n and the previous time instance *n-1* may be provided to the control block 408 which performs the operations described with reference to FIG. 2 above.

The control block 408 may comprise a state change detector which outputs a binary result, e.g. a "o" or "1", or "false" or "true", indicative of one or a plurality of the monitored feature values crossing a respective threshold or the difference between the previous and current values crossing a respective threshold.

If only one feature is monitored, then that feature value, or the difference, is tested against a threshold, e.g. a predetermined threshold, associated with that feature. If a combination of features are monitored, then each respective feature value, or each respective difference, is tested against respective thresholds associated with those features.

If the threshold, or all thresholds in a combination of features, are crossed, then the control block 408 may be configured to transition from a "0" to a "1" or from a "false" to a "true" output to signal that condition(s) have been identified corresponding to a significant signal degradation associated with one of the ISTA 100 and RSTA 102 transitioning from an indoor environment to an outdoor environment.

This may in turn cause termination or adaptation of the positioning session.

The above-mentioned threshold(s) may be empiric thresholds, which may be determined by use of at least one of a channel emulation tool, a simulator, and collected measurements appropriate to the wireless channel.

Additionally, or alternatively, a trained classifier may be configured to take as input a set of test data based on values of the one or more features, or differences thereof, and to provide an output identifying the transition to the second environment, e.g. the outdoor environment, based on trained parameters of the classifier. The trained classifier may implement a decision tree, a decision forest, and/or a deep neural network (DNN) with Sigmoid or Softmax activation function, etc.

The trained classifier may be trained with one or a combination of channel models extracted from, for example, a channel emulator tool, a simulator and/or indoor measurements collected via channel sounding.

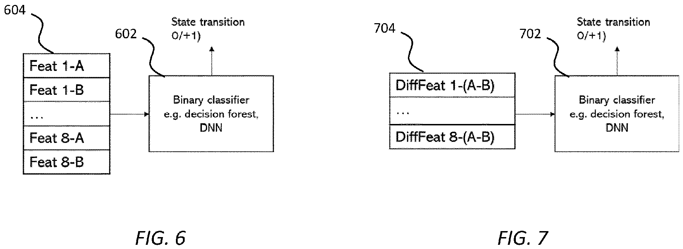

FIGs. 6 and 7 show example schematic views of trained classifier embodiments which may each provide the control block 408.

For example, FIG. 6 shows a trained classifier 602 that receives as input a set of test data 604 which may comprise the values of the above eight features in table 1, stacked together in a column vector, for providing a binary result, e.g. a "0" or "1", or "false" or "true" which may be based on changes from a previous set of test data held within the trained classifier.

For example, FIG. 7 shows a trained classifier 702 that receives as input a set of test data 704 which may comprise the difference between the current and previous values of the above eight features in table 1, again stacked together in a column vector, for providing a binary result, e.g. a "0" or "1", or "false" or "true."

Instead of a trained classifier which outputs a binary result, the control block 408 may be implemented as a regressor which may be configured to compute the probability associated with a sate change, which may be the probability that, at time instance n, ISTA 102 has moved outdoors. If the probability is above 50%, or an alternative value, the control block 408 may be configured to cause termination or adaptation of the positioning session.

In all above embodiments, the choice as to which features to evaluate within the control block 408 may be determined and/or may dynamically change based on variable factors such as a quality metric. The quality metric may, for example, be indicative of at least the signal to noise ratio (SNR) for the wireless channel at or around the current time instance.

For example, a relatively large number of features (e.g. all eight features specified above in table 1) may be selected for monitoring by the control block 408 in good SNR conditions. For example, an SNR of > 6dB may be considered good SNR conditions. For a decreasing quality metric, such as decreasing SNR conditions, only a subset of features may be selected for monitoring. This may comprise selecting fewer features from the above-mentioned first set of features and/or an increasing number of features from the above-mentioned second set of features.

Those features associated with the tail of the channel response are more likely to be characteristic of indoor propagation conditions and hence restricting monitoring to such tail features, or at least a majority of tail features, is more likely to provide a reliable result in poor SNR conditions. For example, only features from the second set of features may be selected, e.g. those with index 2, 4, 8 and 8 in table 1. In the simplest implementation, which may be used under very poor SNR conditions, only feature index 8 may be selected.

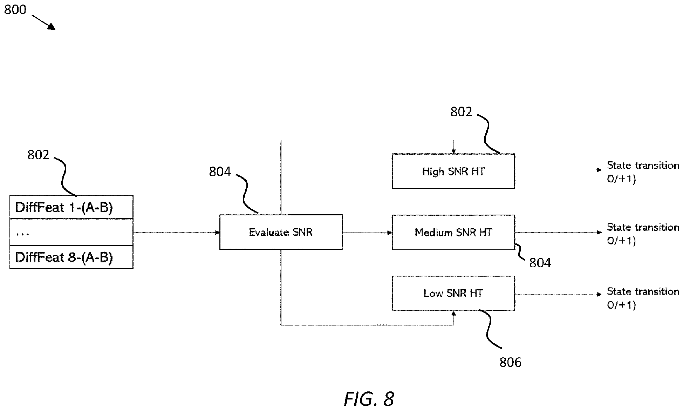

FIG. 8 is a block diagram of an example system 800 which may provide part of the control block 408 shown in FIG. 4. Reference numeral 802 indicates the collection of eight features in table 1. Reference numeral 804 indicates an evaluation block which, in this case, evaluates the SNR at or around the current time instance. Depending on the evaluated SNR, being one of a high, medium and low SNR evaluation, one of three hypothesis testing blocks 802, 804, 806 is enabled to monitor values of selected features appropriate that the respective block and return a binary result, e.g. a "0" or "1", or "false" or "true."

Example embodiments may provide various technical advantages. For example, example embodiments may enable the ISTA 102 to detect when channel conditions have changed drastically, for example when at least of the ISTA 102 and RSTA 104 has moved from an indoor environment to an outdoor environment. By terminating re-establishment of a current PS, the ISTA 102 may instead initiate a new PS with a different RSTA, or alternatively, the ISTA may adapt by transitioning to another positioning technology such as NR positioning or GNSS.

**Example Apparatus**

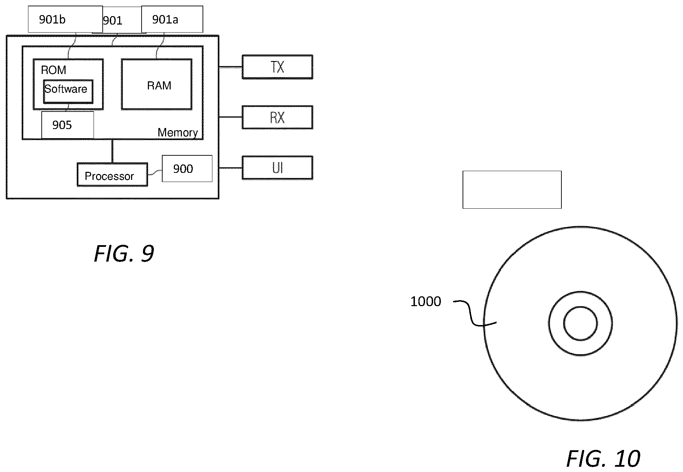

FIG. 9 shows an apparatus according to some example embodiments, which may comprise the ISTA 102. The apparatus may be configured to perform the operations described herein, for example operations described with reference to any disclosed process. The apparatus comprises at least one processor 900 and at least one memory 901 directly or closely connected to the processor. The memory 901 includes at least one random access memory (RAM) 901a and at least one read-only memory (ROM) 901b. Computer program code (software) 905 is stored in the ROM 901b. The apparatus may be connected to a transmitter (TX) and a receiver (RX). The apparatus may, optionally, be connected with a user interface (UI) for instructing the apparatus and/or for outputting data. The at least one processor 900, with the at least one memory 901 and the computer program code 905 are arranged to cause the apparatus to at least perform at least the method according to any preceding process, for example as disclosed in relation to the flow diagrams described herein

FIG. 10 shows a non-transitory media 1000 according to some embodiments. The non-transitory media 1000 is a computer readable storage medium. It may be e.g. a CD, a DVD, a USB stick, a blue ray disk, etc. The non-transitory media 1000 stores computer program code, causing an apparatus to perform the method of any preceding process for example as disclosed in relation to the flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:

   means for monitoring, for a plurality of time instances during transmission over a wireless channel of a positioning signal from a first terminal to the apparatus as part of a positioning session, one or more features of the wireless channel;
   means for identifying based on a value of one, or a combination, of the monitored one or more features between a first time instance and a second time instance, a change indicative of transition of at least one of the first terminal and the apparatus from a first environment to a second environment; and
   means for causing termination or adaptation of the positioning session responsive to the identification.

2. The apparatus of claim 1, wherein the identifying means is configured to identify the change based on knowledge of an expected change in one, or in a combination, of the one or more features due to transition of the at least one of the first terminal and the apparatus from the first environment to the second environment.

3. The apparatus of claim 2, wherein the first environment is an indoor environment and the second environment is an outdoor environment.

4. The apparatus of any preceding claim, further comprising:

   means for computing a channel response for the wireless channel at the plurality of time instances; and
   means for determining the one or more features of the wireless channel based on components of the channel response.

5. The apparatus of claim 4, wherein the means for determining the one or more features is configured to:

   identify from the channel response a first cluster of components as distinct from a second cluster of components in the time domain; and
   determine a first set of features based on components of the first cluster and a second set of features based on components of the second cluster.

6. The apparatus of claim 5, wherein the first cluster and the second cluster are identified based on respective energy levels of the components of the channel response.

7. The apparatus of claim 6, wherein the first cluster of components comprises at least one of:

   components having a respective power within a predetermined range of a maximum power level of the components in the channel response; and
   components which collectively sum, when taken in time-domain order, a predetermined percentage, less than 100%, of the total channel power, and
   wherein the second cluster of components comprises the remaining components .

8. The apparatus of any of claims 5 to 7, wherein the one or more features of the wireless channel comprise one, or a combination of:

maximum cluster power $P_n^A$ as the sum of powers for components of the first cluster;

maximum cluster power $P_n^B$ as the sum of powers for components of the second cluster;

cluster sparsity $S_n^A$ indicative of the number of components in the first cluster;

cluster sparsity $S_n^B$ indicative of the number of components in the second cluster;

mean delay $m_n^A$ of components of the first cluster;

mean delay $m_n^B$ of components of the second cluster;

RMS delay spread $d_n^A$ of components of the first cluster; and

RMS delay spread $d_n^B$ of components of the second cluster.

9. The apparatus of any preceding claim, wherein the identifying means is configured to identify a transition to the second environment in response to a computed change in value for a combination of the features meeting respective thresholds.

10. The apparatus of any preceding claim, further comprising:

means for evaluating a quality metric, at least indicative of the signal to noise ratio, SNR, for the wireless channel at or around the first time instance; and
means for dynamically selecting one or a plurality of the channel features for the identifying means based on the evaluated quality metric.

11. The apparatus of claim 10 when dependent on claim 7, wherein the means for dynamically selecting the one or the plurality of the channel features is configured, responsive to the evaluated quality metric being indicative of a decreasing SNR, to select an increasing number of features from the second set of features based on components of the second cluster.

12. The apparatus of claim 11, wherein, in response to the evaluated quality metric being below a threshold, the selected features are selected from the second set of features based on components of the second cluster.

13. The apparatus of any preceding claim, further comprising means for causing the apparatus to initiate a new positioning session with a different terminal, subsequent to the positioning session being terminated.

14. The apparatus of any of claims 1 to 12, further comprising means, responsive to the identification, for causing the apparatus to adapt the positioning session to use a different positioning technology.

15. A method, comprising:

monitoring, for a plurality of time instances during transmission over a wireless channel of a positioning signal from a first terminal to a second terminal as part of a positioning session, one or more features of the wireless channel;
identifying based on a value of one, or a combination, of the monitored one or more features between a first time instance and a second time instance, a change indicative of transition of at least one of the first and second terminals from a first environment to a second environment; and
causing termination or adaptation of the active positioning session responsive to the identification.

110   106

108

100

104

102

INITIATING
STATION
(ISTA)

RESPONDING
STATION
(RSTA)

*FIG. 1A*

110   106

104

102

100

108

INITIATING
STATION
(ISTA)

RESPONDING
STATION
(RSTA)

*FIG. 1B*

200

202

MONITORING, FOR A PLURALITY OF TIME INSTANCES DURING TRANSMISSION OVER A WIRELESS CHANNEL OF A POSITIONING SIGNAL FROM A FIRST TERMINAL TO A SECOND APPARATUS AS PART OF A POSITIONING SESSION, ONE OR MORE FEATURES OF THE WIRELESS CHANNEL

204

IDENTIFYING, BASED ON A VALUE OF ONE, OR A COMBINATION, OF THE MONITORED ONE OR MORE FEATURES BETWEEN A FIRST TIME INSTANCE AND A SECOND TIME INSTANCE, A CHANGE INDICATIVE OF TRANSITION OF AT LEAST ONE OF THE FIRST TERMINAL AND THE SECOND TERMINAL FROM A FIRST ENVIRONMENT TO A SECOND ENVIRONMENT

206

CAUSING TERMINATION OR ADAPATION OF THE POSITIONING SESSION RESPONSIVE TO THE IDENTIFICATION

FIG. 2

FIG. 3

FIG. 4

500

502

PROVIDING A CHANNEL RESPONSE FOR THE
WIRELESS CHANNEL AT THE PLURALITY OF TIME
INSTANCES

504

IDENTIFYING A FIRST CLUSTER OF
COMPONENTS AS DISTINCT FROM A
SECOND CLUSTER OF COMPONENTS

506

DETERMINING A FIRST SET OF FEATURES
BASED ON COMPONENTS OF THE FIRST
CLUSTER AND A SECOND SET OF FEATURES
BASED ON COMPONENTS OF THE SECOND
CLUSTER

*FIG. 5*

FIG. 6

FIG. 7

800

802

| DiffFeat 1-(A-B) |
| --- |
| ... |
| DiffFeat 8-(A-B) |

804

Evaluate SNR

802

High SNR HT → State transition 0/+1)

Medium SNR HT → State transition 0/+1)

804

Low SNR HT → State transition 0/+1)

806

FIG. 8

901b  901  901a

ROM

Software

905

RAM

Memory

Processor  900

TX

RX

UI

FIG. 9

1000

FIG. 10

Europäisches
Patentamt

European
Patent Office

Office européen
des brevets

# EUROPEAN SEARCH REPORT

Application Number

EP 21 21 3267

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/011433 A2 (ORIGIN WIRELESS INC [US]) 21 January 2016 (2016-01-21) * paragraphs [0002] – [0061], [00110] – [00341]; figures 1A-79 * | 1-15 | INV. H04W64/00 G01S5/02 G01S13/76 |
| X | US 2014/114568 A1 (PARK YOUNG SHIN [US]) 24 April 2014 (2014-04-24) * paragraphs [0003], [0005], [0006], [0023] – [0055]; figures 1-8 * | 1-15 | ADD. H04W84/12 |
| X | KR 101 616 720 B1 (UNIV TONGMYONG IND ACAD COOP FOUND [KR]) 2 May 2016 (2016-05-02) * paragraphs [0001] – [0054]; figures 1-4 * | 1-15 | |
| X | CN 103 826 241 A (UNIV XIDIAN) 28 May 2014 (2014-05-28) * paragraphs [0002] – [0038]; figure 1 * | 1-15 | |
| | | | TECHNICAL FIELDS SEARCHED (IPC) |
| A | US 2019/349280 A1 (ZHANG XIAOXIN [US] ET AL) 14 November 2019 (2019-11-14) * paragraphs [0002] – [0013], [0040] – [0181]; figures 1-22 * | 1-15 | H04W G01S H04L |

The present search report has been drawn up for all claims

| Place of search | Date of completion of the search | Examiner |
|---|---|---|
| Berlin | 28 April 2022 | Jaster, Nicole |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

**EP 4 195 802 A1**

## ANNEX TO THE EUROPEAN SEARCH REPORT
## ON EUROPEAN PATENT APPLICATION NO.

EP 21 21 3267

28-04-2022

| Patent document cited in search report | | Publication date | Patent family member(s) | | Publication date |
|---|---|---|---|---|---|
| WO 2016011433 | A2 | 21-01-2016 | CN | 106664265 A | 10-05-2017 |
| | | | EP | 3195541 A2 | 26-07-2017 |
| | | | JP | 6688791 B2 | 28-04-2020 |
| | | | JP | 2017531811 A | 26-10-2017 |
| | | | JP | 2020128987 A | 27-08-2020 |
| | | | WO | 2016011433 A2 | 21-01-2016 |
| US 2014114568 | A1 | 24-04-2014 | CN | 104737030 A | 24-06-2015 |
| | | | EP | 2909646 A1 | 26-08-2015 |
| | | | JP | 6463684 B2 | 06-02-2019 |
| | | | JP | 6640307 B2 | 05-02-2020 |
| | | | JP | 2015537444 A | 24-12-2015 |
| | | | JP | 2019050596 A | 28-03-2019 |
| | | | US | 2014114568 A1 | 24-04-2014 |
| | | | WO | 2014066311 A1 | 01-05-2014 |
| KR 101616720 | B1 | 02-05-2016 | NONE | | |
| CN 103826241 | A | 28-05-2014 | NONE | | |
| US 2019349280 | A1 | 14-11-2019 | US | 2019349280 A1 | 14-11-2019 |
| | | | WO | 2019217688 A1 | 14-11-2019 |

EPO FORM P0459